# EUROPEAN PATENT SPECIFICATION

(11) **EP 0 729 387 B1**
(45) Date of publication and mention of the grant of the patent: **15.09.1999**
(21) Application number: 95901906.8
(22) Date of filing: 15.11.1994
(51) Int. Cl.: C08F 10/00, C08F 4/658

(54) **CATALYST COMPOSITION FOR USE IN THE POLYMERIZATION AND COPOLYMERIZATION OF ETHYLENE**
KATALYSATORZUSAMMENSETZUNG ZUM ANWENDEN BEIM POLYMERISIEREN UND KOPOLYMERISIEREN VON AETHYLEN
CATALYSEUR DE POLYMERISATION ET DE COPOLYMERISATION DE L'ETHYLENE

(30) Priority: 15.11.1993 US 151664
(43) Date of publication of application: 04.09.1996
(73) Proprietor: MOBIL OIL CORPORATION, Fairfax, Virginia 22037-0001 (US)
(72) Inventor: LO, Frederick, Yip-Kwai, Edison, NJ 08818 (US); NOWLIN, Thomas, Edward, Cranbury, NJ 08512 (US); SCHREGENBERGER, Sandra, Denise, Neshanic, NJ 08853 (US); SHIRODKAR, Pradeep, Pandurang, Somerset, NJ 08873 (US); TSIEN, Grace, Onkee, Colonia, NJ 07067 (US)
(74) Representative: Hucker, Charlotte Jane
(86) International application number: US9413128
(87) International publication number: WO9513871

(56) References cited:
- US-A- 4 530 914
- US-A- 4 578 373
- US-A- 5 032 562
- US-A- 5 332 706

## Description

This invention relates to a catalyst composition for use in the polymerization and copolymerization of ethylene, particularly of bimodal molecular weight distribution high density and linear low density polymers and copolymers of ethylene.

Polyethylene is produced commercially in a gas phase reaction in the absence of solvents and in slurry by catalysis. To be commercially useful in the gas phase fluid bed process, the catalyst must exhibit high activity, with concomitant high catalyst productivity, because gas phase process systems do not include catalyst residue removal procedures. Accordingly, catalyst residue in the polymer product must be so small that it can be left in the polymer without causing any undue problems in the fabrication and/or to the ultimate consumer. To this end, the patent literature is replete with developments of new catalysts, of high activity with corresponding high productivity values.

The use of metallocene compounds of transition metals as catalysts for polymerization and copolymerization of ethylene is one of those developments. Metallocenes can be described by the empirical formula CpₓMA_{y}B_{z}. These compounds in combination with methylalumoxane (MAO) compounds have been used to produce olefin polymers and copolymers, such as ethylene and propylene homopolymers, ethylene-butene and ethylene-hexene copolymers, e.g., see US-A-4542199 and US-A-4404344.

More recently, as exemplified in US-A-5032562, metallocene catalysts containing a second transition metal, such as titanium have been developed which produce bimodal molecular weight distribution products, having a high molecular weight component and a relatively lower molecular weight component. The development of a catalyst which can produce bimodal products in a single reactor is significant per se. That development also provides a commercial alternative to processes which require two reactors to produce bimodal production with production of one of the molecular weight components in a first reactor and transfer of that component to a second reactor and completion of the polymerization with production of the other component of different molecular weight.

Alumoxanes, e.g. methylalumoxane (MAO), are used as cocatalyst with metallocenes. The class of alumoxanes comprises oligomeric linear and/or cyclic alkylalumoxanes represented by the formula: R-(Al(R)-O)ₙ-AlR₂ for oligomeric, linear alumoxanes; and (-Al(R)-O-)ₘ for oligomeric cyclic alumoxanes wherein n is 1-40, preferably 10-20, m is 3-40, preferably 3-20 and R is a C₁-c₈ alkyl group and preferably methyl.

Methylalumoxane is commonly produced by reacting trimethylaluminum with water or with hydrated inorganic salts, such as CuSO₄.5H₂O or Al₂(SO₄)₃.5H₂O. Methylalumoxane can be also generated in situ in polymerization reactors by adding to the reactor trimethylaluminum and water or water-containing inorganic salts. MAO is a mixture of oligomers with a very wide distribution of molecular weights and usually with an average molecular weight of about 1200. MAO is tipycally kept in solution in toluene. While the MAO solutions remain liquid at fluid bed reactor temperatures, the MAO itself is a solid at room temperature.

Most of the experiments reported in the literature relating to methylalumoxane used as a cocatalyst with metallocene catalysts are undertaken in a slurry or solution process, rather than in a gas phase fluid bed reactor process.

In processes such as that disclosed in US patent 5,032,562 reactor fouling results when MAO solutions are fed directly into the gas phase reactor in large enough quantities to provide liquid contact with the metallocene component of the catalyst. The fouling occurs because the MAO solution forms a liquid film on the interior walls of the reactor. The catalyst is activated when it comes into contact with this liquid film, and the activated catalyst reacts with ethylene to form a polymer coating which grows larger in size until the reactor is fouled. In addition, since substantially all of the activation takes place on the walls, the MAO is not uniformly distributed to the catalyst particles. The resulting non-homogeneous polymerization gives low catalyst activity and poor product properties.

According to the present invention, there is provided a process for preparing bimodal molecular weight distribution, high density and linear low density polymers and copolymers of ethylene, comprising polymerising ethylene in a reactor in the presence of an aluminium alkyl non-oxygen containing activator and a catalyst comprising, carried on a dry, anhydrous solid support,
(a) a metallocene compound of a transition metal activated by an alumoxane; and
(b) a non-metallocene transition metal compound, for activation by the aluminium alkyl non-oxygen containing activator;
and wherein the support is the reaction product of:
(1) silica having OH groups, impregnated with RₘMgR'ₙ, wherein each of Rₘ and Rₙ is alkyl group containing 1 to 12 carbon atoms, each of m and n is 0, 1 or 2 provided that m+n is equal to the valency of Mg, and RₘMgR'ₙ is present in an amount to provide a RₘMgR'ₙ: OH molar ratio of 0.5:1 to 4:1; and
(2) an organic alcohol reagent (R''OH) providing alkoxy groups having a formula R"O-, wherein R'' is an alkyl group containing 1 to 12 carbons, said alkoxy groups being effective to displace the Rₘ and R'ₙ of said RₘMgR'ₙ, and said reagent being used in an amount effective to provide an alcohol: Mg molar ratio of 0.5 to 2.0; and
wherein there is no alumoxane fed to the reactor.

In a preferred embodiment, the support is formed by
(i) providing a slurry of non-polar solvent and a solid porous silica having -OH groups;
(ii) impregnating said silica, with said RₘMgR'ₙ, to form an intermediate (ii), wherein the Mg:-OH groups ratio is less than 2, wherein said RₘMgR'ₙ is soluble in said non-polar solvent;
(iii) treating an intermediate from step (ii) with an amount of R''OH, which amount is effective to provide a R''OH:RₘMgR'ₘ molar ratio of 0.5 to 2.0.

It is preferred that this embodiment includes further steps, after (iii), comprising:
(iv) treating the product of step (iii) product with TiCl₄ to form a titanium containing intermediate; and
(v) combining the titanium containing intermediate with a said activator.

As explained above, the catalyst comprises at least two transition metal components on a support; one of the two transition metal components is provided in the form of a metallocene. The supported transition metals are activated by an aluminum compound, free of water and of oligomeric and polymeric oxygen-containing compounds of aluminum. Polymerization products comprise two components of different molecular weight, thus one being of higher molecular weight than the other. The film products exhibit excellent Drop Dart Impact (DDI) and excellent bubble stability in high stalk extrusion.

The present invention, in common with the invention disclosed in US patent 5,032,562, relates to the use of a catalyst in the preparation of bimodal molecular weight distribution polymers and copolymers of ethylene, which can be prepared in one reactor. The catalyst comprises at least two transition metal components on a support; one of the two transition metal components is provided in the form of a metallocene. The supported transition metals are activated by a non-oxygen containing aluminum compound. In accordance with the present invention, no alumoxane (e.g. methylalumoxane) feed to the reactor (slurry or gas phase fluid bed) is required for the activation of the transition metal provided as a metallocene.

Catalysts which contain at least two transition metals, one in the form of a metallocene and one transition metal in the form of a non-metallocene, have an activity of at least about 1000 g polymer/g catalyst or about 200 kg polymer/g of each transition metal.

The catalysts used in the claimed process are activated by a cocatalyst comprising an aluminum alkyl compound, such as a trialkyl aluminum, free of alumoxane and free of water, or oxygen-containing oligomers and polymers of the aluminum alkyl compound. A catalyst precursor comprises a carrier, an alumoxane, at least one metallocene, and a non-metallocene transition metal source.

The carrier material is a solid, particulate, porous, silica. The carrier material may be used in the form of a dry powder having an average particle size of from 1 micron to 500 microns, preferably from 10 microns to 250 microns. The surface area of the carrier may be at least 3 square meters per gram (m²/g), and preferably at least 50 m²/g up to 350 m²/g. The carrier material should be dry, that is, free of absorbed water. Drying of the carrier material can be effected by heating at 100°C to 1000°C, preferably at about 600°C. When the carrier is silica, it is heated to at least 200°C, preferably 200°C to 850°C and most preferably at about 600°C. The carrier material must have at least some active hydroxyl (OH) groups to produce the catalyst used in the claimed process.

In the preferred embodiment, the carrier of silica prior to the use thereof in the first catalyst synthesis step has been dehydrated by fluidizing it with nitrogen and heating at about 600°C for about 16 hours to achieve a surface hydroxyl group concentration of about 0.7 millimoles per gram (mmols/g). The silica of the most preferred embodiment is a high surface area, amorphous silica (surface area = 300 m²/g; pore volume of about 1.65 cm³/g), and it is a material marketed under the tradenames of Davison 952 or Davison 955 by the Davison Chemical Division of W.R. Grace and Company. This silica is in the form of spherical particles, e.g., as obtained by a spray-drying process. As procured, these silicas are not calcined; and this must be dehydrated, as indicated above.

The catalyst synthesis is undertaken under inert conditions, in the absence of water and of oxygen. The carrier is dispersed in solvent to form a slurry.

The carrier material, having said (OH) groups, may be slurried in a non-polar solvent and the resulting slurry is contacted with at least one organomagnesium compound having the empirical formula below. The slurry of the carrier material in the solvent is prepared by introducing the carrier into the solvent, preferably while stirring, and heating the mixture to 25 to 70°C, preferably to 40 to 60°C. Temperatures here are critical with respect to the non-metallocene transition metal which is subsequently added; that is temperatures in this slurry of about 90°C result in deactivation of the transition metal added subsequently. Accordingly, all catalyst precursor synthesis steps are preferably conducted below 90°C. The slurry is then contacted with the aforementioned organomagnesium compound, while the heating is continued as indicated.

The organomagnesium compound has the empirical formula

RₘMgR'ₙ

where R and R' are the same or different C₁ to C₁₂ alkyl groups, preferably C₂-C₁₂ alkyl groups, more preferably C₄-C₁₀ alkyl groups, more preferably C₄-C₈ normal alkyl groups, and most preferably both R and R' are mostly n-butyl groups; m and n are each 0, 1 or 2, providing that m + n is equal to the valence of Mg.

Suitable non-polar solvents are materials in which all of the reactants may be used herein, i.e., the organomagnesium compound, and the transition metal compound, are at least partially soluble and which are liquid at reaction temperatures. Preferred non-polar solvents are alkanes, such as isopentane, hexane, n-heptane, octane, nonane, and decane, although a variety of other materials including cycloalkanes, such as cyclohexane, aromatics, such as benzene, toluene and ethylbenzene, may also be employed. The most preferred non-polar solvent is isopentane. Prior to use, the non-polar solvent should be purified, such as by percolation through silica gel and/or molecular sieves, to remove traces of water, oxygen, polar compounds, and other materials capable of adversely affecting catalyst activity.

In the most preferred embodiment of the synthesis of this catalyst it is important to add only such an amount of the organomagnesium compound that will be deposited - physically or chemically - onto the support since any excess of the organomagnesium compound in the solution may react with other synthesis chemicals and precipitate outside of the support. The carrier drying temperature affects the number of sites on the carrier available for the organomagnesium compound - the higher the drying temperature the lower the number of sites. Thus, the exact molar ratio of the organomagnesium compound to the hydroxyl groups will vary and must be determined on a case-by-case basis preferably to ensure that only so much of the organomagnesium compound is added to the solution as will be deposited onto the support without leaving any excess of the organomagnesium compound in the solution. Furthermore, it is believed that the molar amount of the organomagnesium compound deposited onto the support is greater than the molar content of the hydroxyl groups on the support. Thus, the molar ratios given below are intended only as an approximate guideline and the exact amount of the organomagnesium compound in this embodiment must be controlled by the functional limitation discussed above, i.e., it is preferably not greater than that which can be deposited onto the support. If greater than that amount is added to the solvent, the excess may react with the non-metallocene transition metal compound, thereby forming a precipitate outside of the support which is detrimental in the synthesis of our catalyst: this is generally undesirable. The amount of the organomagnesium compound which is not greater than that deposited onto the support can be determined in any conventional manner, e.g., by adding the organomagnesium compound to the slurry of the carrier in the solvent, while stirring the slurry, until the organomagnesiun compound is detected as a solution in the solvent.

For the silica carrier heated at about 600°C, the amount of the organomagnesium compound added to the slurry is such that the molar ratio of Mg to the hydroxyl groups (OH) on the solid carrier is 0.5:1 to 4:1, preferably 0.8:1 to 3:1, more preferably 0.9:1 to 2:1 and most preferably about 1:1. The organomagnesium compound dissolves in the non-polar solvent to form a solution from which the organomagnesium compound is deposited onto the carrier.

It is also possible to add such an amount of the organomagnesium compound which is in excess of that which will be deposited onto the support, and then remove, e.g., by filtration and washing, any excess of the organomagnesium compound. However, this alternative is less desirable than the most preferred embodiment described above.

The organomagnesium treated support is contacted with an organic alcohol reagent (R"OH) containing R"O' groups which are reactive or capable of displacing alkyl groups on the magnesium. The amount of this organic alcohol reagent is effective to provide a R"OH:Mg ratio of 0.5 to 2.0, preferably 0.8 to 1.5.

Contact of the silica supported magnesium compound, with the organic alcohol reagent is undertaken in the slurry. Contact is undertaken at a temperature ranging from 25°C to 80°C, preferably 40°C to 70°C.

The alkyl group in the organic alcohol reagent can contain 1 to 12 carbon atoms, preferably 1 to 8; in the embodiments below, it is an alkyl containing 2 to 4 carbon atoms, particularly of 4 carbon atoms (butyl). The inclusion of the alcohol reagent step in the catalyst synthesis of the invention produces a catalyst which, relative to the absence of this step, is much more active, requires much less non-transition metal (e.g. titanium), and is much more active with respect to the product component produced with the metallocene-transition metal component.

After the addition of the organic alcohol reagent to the slurry is completed, the slurry is contacted with a non-metallocene transition metal compound, free of substituted or unsubstituted cyclopentadienyl groups. The slurry temperature is preferably be maintained at 25 to 70°C, more preferably at 40 to 60°C. As noted above, temperatures in this slurry of about 80°C or greater result in deactivation of the non-metallocene transition metal. Suitable non-metallocene transition metal compounds used herein are compounds of metals of Groups 4A, and 5A, of the Periodic Chart of the Elements, as published by Chemical and Engineering News, 63(5), 27, 1985, providing that such compounds are soluble in the non-polar solvents. Non-limiting examples of such compounds are titanium and vanadium halides, e.g., titanium tetrachloride, TICl₄, vanadium tetrachloride, VCl₄, vanadium oxytrichloride, VOCl₃, titanium and vanadium alkoxides, wherein the alkoxide moiety has a branched or unbranched alkyl radical of 1 to 20 carbon atoms, preferably 1 to 6 carbon atoms. The preferred transition metal compounds are titanium compounds, preferably tetravalent titanium compounds. The most preferred titanium compound is titanium tetrachloride. The amount of titanium or vanadium, in non-metallocene form preferably ranges from a Ti:Mg molar ratio of 0.3 to 1.0, preferably from 0.50 to 0.80.

Mixtures of such non-metallocene transition metal compounds may also be used and generally no restrictions are imposed on the transition metal compounds which may be included. Any transition metal compound that may be used alone may also be used in conjunction with other transition metal compounds.

After the addition of the non-metallocene transition metal compound is complete, the slurry solvent is removed by evaporation or filtering to obtain a free-flowing powder. Next, incorporation of the metallocene can be undertaken. The metallocene is activated with an alumoxane.

The metallocene compound has the formula CpₓMA_{y}B_{z} in which Cp is an unsubstituted or substituted cyclopentadienyl group, M is zirconium or hafnium and A and B belong to the group including a halogen atom, hydrogen or an alkyl group. In the above formula of the metallocene compound, the preferred transition metal atom M is zirconium. In the above formula of the metallocene compound, the Cp group is an unsubstituted, a mono- or a polysubstituted cyclopentadienyl group; and x is at least 1. The substituents on the cyclopentadienyl group can be preferably straight-chain C₁-C₆ alkyl groups. The cyclopentadienyl group can be also a part of a bicyclic or a tricyclic moiety such as indenyl, tetrahydroindenyl, fluorenyl or a partially hydrogenated fluorenyl group, as well as a part of a substituted bicyclic or tricyclic moiety. In the case when x in the above formula of the metallocene compound is equal to 2, the cyclopentadienyl groups can be also bridged by polymethylene or dialkylsilane groups, such as -CH₂-, -CH₂-CH₂-, -CR'R"- and -CR'R"-CR'R"- where R' and R" are short alkyl groups or hydrogen, -Si(CH₃)₂-, Si(CH₃)₂-CH₂-CH₂-Si(CH₃)₂- and similar bridge groups. If the A and B substituents in the above formula of the metallocene compound are halogen atoms, they belong to the group of fluorine, chlorine, bromine or iodine; and y + z is 3 or less, provided that x + y + z equals the valence of M. If the substituents A and B in the above formula of the metallocene compound are alkyl groups, they are preferably straight-chain or branched C₁-C₈ alkyl groups, such as methyl, ethyl, n-propyl, isopropyl, n-butyl, isobutyl, n-pentyl, n-hexyl or n-octyl.

Suitable metallocene compounds include bis(cyclopentadienyl)metal dihalides, bis(cyclopentadienyl)metal hydridohalides, bis(cyclopentadienyl)metal monoalkyl monohalides, bis(cyclopentadienyl)metal dialkyls and bis(indenyl)metal dihalides wherein the metal is zirconium or hafnium, halide groups are preferably chlorine and the alkyl groups are C₁-C₆ alkyls. Illustrative, but non-limiting examples of metallocenes include bis(cyclopentadienyl)zirconium dichloride, bis(cyclopentadienyl)hafnium dichloride, bis(cyclopentadienyl)zirconium dimethyl, bis(cyclopentadienyl)hafnium dimethyl, bis(cyclopentadienyl)zirconium hydridochloride, bis(cyclopentadienyl)hafnium hydridochloride, bis(n-butylcyclopentadienyl)zirconium dichloride bis(n-butylcyclopentadienyl)hafnium dichloride, bis(n-butylcyclopentadienyl)zirconium dimethyl, bis(n-butylcyclopentadienyl)hafnium dimethyl, bis(n-butylcyclopentadienyl)zirconium hydridochloride, bis(n-butylcyclopentadienyl)hafnium hydridochloride, bis(pentamethylcyclopentadienyl)zirconium dichloride, bis(pentamethylcyclopentadienyl)hafnium dichloride, bis(n-butylcyclopentadienyl)zirconium dichloride, cyclopentadienylzirconium trichloride, bis(indenyl)zirconium dichloride, bis(4,5,6,7-tetrahydro-1-indenyl)zirconium dichloride, and ethylene-[bis(4,5,6,7-tetrahydro-1-indenyl)] zirconium dichloride. The metallocene compounds utilized within the embodiment of this art can be used as crystalline solids, as solutions in aromatic hydrocarbons or in a supported form.

The alumoxane can be impregnated into the carrier at any stage of the process of catalyst preparation. In this embodiment, the amount of Al, provided by alumoxane, is sufficient to provide an Al:transition metal (provided by metallocene) mole ratio ranging from 50 to 500, preferably 75 to 300.

The class of alumoxanes comprises oligomeric linear and/or cyclic alkylalumoxanes represented by the formula: R-(Al(R)-O)ₙ-AlR₂ for oligomeric, linear alumoxanes and (-Al(R)-O-)ₘ for oligomeric cyclic alumoxane wherein n is 1-40, preferably 10-20, m is 3-40, preferably 3-20 and R is a C₁-C₈ alkyl group and preferably methyl. MAO is a mixture of oligomers with a very wide distribution of molecular weights and usually with an average molecular weight of about 1200. MAO is typically kept in solution in toluene. The MAO solutions remain liquid at fluid bed reactor temperatures.

Incorporation of the activated metallocene component onto the carrier can be accomplished in various ways. Incorporation of either or both the aluminoxane can be into the slurry resulting from the addition, i.e. after the addition, of the non-metallocene transition metal.

Alternatively, and in accordance with the unique method of infusion of alumoxane into the pores of the carrier, the carrier slurry can be stripped of solvent, after the addition of the non-metallocene transition metal compound, to form a free-flowing powder. The free flowing powder can then be impregnated by determining the pore volume of the carrier and providing an alumoxane (or metallocene-alumoxane) solution in a volume equal to or less than the total pore volume of the carrier, and recovering a dry catalyst precursor. The resulting free-flowing powder, referred to herein as a catalyst precursor, is combined with an activator (sometimes referred as a cocatalyst).

The volume of the solution comprising a solid alumoxane and a solvent therefor can vary. In a preferred embodiment, of alumoxane incorporation into the carrier, one of the controlling factors in the alumoxane incorporation into the carrier material catalyst synthesis is the pore volume of the silica. In this preferred embodiment, the process of impregnating the carrier material is by infusion of the alumoxane solution, without forming a slurry of the carrier material, such as silica, in the alumoxane solution. The volume of the solution of the alumoxane is sufficient to fill the pores of the carrier material without forming a slurry in which the volume of the solution exceeds the pore volume of the silica; accordingly and preferably, the maximum volume of the alumoxane solution is, does not exceed, the total pore volume of the carrier material sample. That maximum volume of the alumoxane solution ensures that no slurry of silica is formed. Accordingly, if the pore volume of the carrier material is 1.65cm₃/g, then the volume of alumoxane will be equal to or less than 1.65 cm₃/gram of carrier material. As a result of this proviso, the impregnated carrier material will appear dry immediately following impregnation although the pores of the carrier will be filled with inter alia solvent. In one embodiment the pore volume of silica carrier is in the range 1.0 cm³/g to 4.0 cm³/g and the carrier is activated with a volume of methylalumoxane which is equal to the total pore volume of the carrier.

Solvent may be removed from the alumoxane impregnated pores of the carrier material by heating and/or under a positive pressure induced by an inert gas, such as nitrogen. If employed, the conditions in this step are controlled to reduce, if not to eliminate, agglomeration of impregnated carrier particles and/or crosslinking of the alumoxane. In this step, solvent can be removed by evaporation effected at relatively low elevated temperatures of above 40°C and below 50°C to obviate agglomeration of catalyst particles and crosslinking of the alumoxane. Although solvent can be removed by evaporation at relatively higher temperatures than that defined by the range above 40°C and below 50°C, very short heating times schedules must be employed to obviate agglomeration of catalyst particles and crosslinking of the alumoxane.

In a preferred embodiment, the metallocene is added to the solution of the alumoxane prior to impregnating the carrier with the solution. Again, as noted above, the maximum volume of the alumoxane solution also including the metallocene is the total pore volume of the carrier material sample. The mole ratio of alumoxane provided aluminum, expressed as Al, to metallocene metal expressed as M (e.g. Zr), preferably ranges from 50 to 500, more preferably 75 to 300, and most preferably 100 to 200. An added advantage of the present invention is that this Al:Zr ratio can be directly controlled. In a preferred embodiment the alumoxane and metallocene compound are mixed together at a temperature of 20 to 80°C, for 0.1 to 6.0 hours, prior to use in the infusion step. The solvent for the metallocene and alumoxane can be appropriate solvents, such as aromatic hydrocarbons, halogenated aromatic hydrocarbons, ethers, cyclic ethers or esters, preferably it is toluene.

The catalyst precursor component formed from the organomagnesium compound, the non-metallocene transition metal and the activated metallocene, must now be activated with a cocatalyst, which is an alkyl aluminum compound, free of water and free of oxygen-containing oligomers.

The cocatalyst can be a trialkylaluminium, free of an alumoxane. Preferably, trimethylaluminum (TMA) is the cocatalyst or activator. The amount or the TMA activator is preferably sufficient to give an Al:Ti molar ratio of 10:1 to 1000:1, more preferably 15:1 to 300:1, and most preferably 20:1 to 100:1. The catalyst exhibits high activity for long periods of time, and exhibits little deactivation.

The catalyst precursor of this invention comprises a metallocene compound and an alumoxane which is fed to the fluid bed reactor for gas phase polymerizations and copolymerizations of ethylene in particulate form. Moreover, in accordance with the invention, the cocatalyst or activator is fed to the fluid bed reactor for polymerizations and copolymerizations of ethylene in the absence of alumoxane solution.

The polymerization products produced using the catalyst according to the invention comprise two components of different molecular weight, with one MW component being of relatively higher molecular weight than the other. The relatively higher molecular weight component, of the bimodal molecular weight distribution product, has a relatively narrow molecular weight distribution. These resins exhibit better bubble stability than resins produced by other catalysts in which the MWD of the high MW component is relatively broad. Bubble stability is a prerequisite to use of the resin product in high stalk extrusion film equipment operating under commercially acceptable rates. (10-20 lb/hr.inch (0.18 to 0.36 Kg/hr.cm) die rate at thin gauge (< 1 mil (25 µ))).

The products exhibit excellent Dart Drop Impact (DDI) as measured by ASTM D 1709. The products exhibit Dart Drop Impact (DDI) in the range of 150 to 800g, preferably from 300 to 800g, and most preferably from 400 to 800g for a nominal 1 mil (25 µ) gauge film.

Ethylene polymers, as well as copolymers of ethylene with one or more C₃-C₁₀ alpha-olefins, can be produced in accordance with the invention. Thus, copolymers having two monomeric units are possible as well as terpolymers having three monomeric units. Particular examples of such polymers include ethylene/1-butene copolymers, ethylene/1-hexene copolymers and ethylene/4-methyl-1-pentene copolymers.

Hydrogen may be used as a chain transfer agent in the polymerization reaction of the present invention. The ratio of hydrogen/ethylene employed will vary between 0 to 2.0 moles of hydrogen per mole or ethylene in the gas phase. Any gas inert to the catalyst and reactants can also be present in the gas stream.

Ethylene/1-butene and ethylene/1-hexene copolymers are the most preferred copolymers polymerized in the process of and with the catalyst of this invention. The ethylene copolymers produced in accordance with the present invention preferably contain at least about 80 percent by weight of ethylene units. The cocatalyst of this invention can also be used with the catalyst precursor of this invention to polymerize propylene and other alpha-olefins and to copolymerize them.

In another embodiment of the invention, the catalyst of the invention exhibits high activity for polymerization of ethylene and higher alpha-olefins and allows the synthesis of ethylene polymers and copolymers with a broad molecular weight distribution and generally, bimodal molecular weight distribution with a relatively high molecular weight component and with a relatively lower molecular weight component in the resin blend. The molecular weight distribution of the bimodal resin, expressed as MFR, is 70 to 200.

Reference is now made to the accompanying drawings, in which:
Figure 1 is a gel permeation chromatogram of Example 4 product;
Figure 2 is a gel permeation chromatogram of Example 3 product;
Figure 3 is a gel permeation chromatogram of bimodal molecular weight distribution resin product, in which one component of the resin was produced under one set of polymerization conditions and the other component was produced under a second set of conditions; and
Figure 4 is a schematic drawing of a fluid bed reactor for gas phase polymerization (and copolymerization).

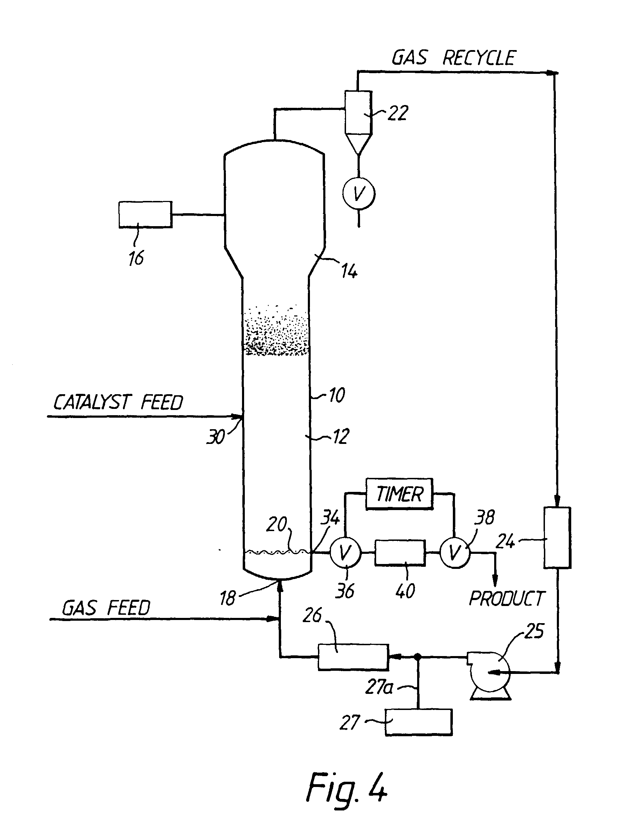

Referring to Figure 4, a reactor 10 consists of a reaction zone 12, a velocity reduction zone 14 and the distributor plate 20. Although fouling can occur in all of the cold areas (areas in a reactor at a temperature which is less than the temperature at which any component(s), in the gas phase reactor are liquid rather thin gaseous) distributor plate fouling is the one most easily detected, since it results in a rapid increase in the pressure drop across the distributor plate due to flow restriction. Such flow restrictions also result in changing fluidization patterns and contribute to reactor wall fouling. The lowest temperature in the reactor loop is in the reactor inlet beneath the distributor plate. Other areas representing the coldest sections in the fluid bed reactor system include the cooler and piping between the cooler and the bottom head.

The reaction zone 12 comprises a bed of growing polymer particles and a minor amount of catalyst particles fluidized by the continuous flow of polymerizable and modifying gaseous components. To maintain a viable fluidized bed, the mass gas flow rate through the bed must be above the minimum flow required for fluidization, and preferably from 1.5 to 10 times Gmf and more preferably from 3 to 6 times Gmf. Gmf is used in the accepted form as the abbreviation for the minimum mass gas flow required to achieve fluidization, C. Y. Wen and Y. H. Yu, "Mechanics of Fluidization", Chemical Engineering Progress Symposium Series, Vol. 62, p, 100-111 (1966). The distribution plate 20 serves the purpose of diffusing recycle gas through the bed at a rate sufficient to maintain fluidization at the base of the bed. Fluidization is achieved by a high rate of gas recycle to and through the bed, typically in the order of about 50 times the rate of feed of make-up gas. Make-up gas is fed to unity to drop back into the bed, through a cyclone 22, through a filter 24 (optionally) and is compressed in a compressor 25, passes through a heat exchanger 26 and is returned to the bed. The distribution plate 20 serves the purpose of diffusing recycle gas through the bed at a rate sufficient to maintain fluidization. The plate may be a screen, slotted plate, perforated plate, and a plate of the bubble cap type. The elements of the plate may all be stationary, or the plate may be of the mobile type disclosed in US-A-3298792.

It is generally important to operate the fluid bed reactor at a temperature below the sintering temperature of the polymer particles. For the production of ethylene copolymers in the process of the present invention an operating temperature of 30° to 115°C is preferred, and a temperature of 75° to 95°C is most preferred. Temperatures of 75° to 90°C are used to prepare products having a density of 0.91 to 0.92 g/cm³, and temperatures of 80° to 100°C are used to prepare products having a density of 0.92 to 0.94 g/cm³, and temperatures of 90° to 115°C are used to prepare products having a density of 0.94 to 0.96 g/cm³.

The fluid bed reactor is operated at pressures of up to 1000 psi (6.9 MPa), and is preferably operated at a pressure of from 150 to 350 psi (1.0 to 2.4 MPa), with operation at the higher pressures in such ranges favouring heat transfer since an increase in pressure increases the unit volume heat capacity of the gas.

The partially or completely activated catalyst is injected into the bed at a point above the distribution plate at a rate equal to its consumption. Since the catalysts used in the practice of this invention are highly active, injection of the fully activated catalyst into the area below the distribution plate may cause polymerization to begin there and eventually cause plugging of the distribution plate. Injection into the bed, instead, aids in distributing the catalyst throughout the bed and precludes the formation of localized spots of high catalyst concentration.

The production rate of polymer in the bed is controlled by the rate of catalyst injection. Since any change in the rate of catalyst injection changes the rate of generation of the heat of reaction, the temperature of the recycle gas is adjusted to accommodate the change in rate of heat generation. Complete instrumentation of both the fluidized bed and the recycle gas cooling system is, of course, necessary to detect any temperature change in the bed so as to enable the operator to make a suitable adjustment in the temperature of the recycle gas.

Since the rate of heat generation is directly related to product formation, a measurement of the temperature rise of the gas across the reactor (the difference between inlet gas temperature and exit gas temperature) is determinative of the rate of particulate polymer formation at a constant gas velocity.

Under a given set of operating conditions, the fluidized bed is maintained at essentially a constant height by withdrawing a portion of the bed as product at a rate equal to the rate of formation of the particulate polymer product.

### Examples

### (I) CATALYST PREPARATION

The titanium component of the catalyst was prepared first and isolated as a free-flowing powder. The zirconium component of the catalyst was prepared using a "dry" impregnation method described above.

### Example 1

(A) Titanium Catalyst Component Preparation: 541 grams of Davison grade 955-[600°C calcination temperature] silica was weighed into a two-gallon (0.008 m³) stainless steel autoclave containing a stirring paddle. Next, about 4.8 litres of dry isopentane was added to the autoclave and the stirring rate was set at 100 rpm. The temperature of the silica/isopentane slurry was 54-58°C. Next, 546 cm³ of dibutylmagnesium (0.713 mmol/ml) was added to the slurry. The contents of the autoclave were stirred for 60 minutes. Then, 35.6 cm³ of neat 1-butanol were added and stirring was continued for one hour. Finally, 21.4 cm³ of titanium tetrachloride was added to the autoclave and stirring continued for 60 minutes. After this time, all solvents were removed by evaporation under a nitrogen purge. Catalyst yield was 496 grams of a tan free-flowing powder. Ti found 1.48 wt.%; Mg found 1.48 wt.%.
(B) Small-Scale Catalyst Preparation: Solution (X): 0.0850 grams of (BuCp)₂ZrCl₂ was transferred to a 30 cm³ serum-bottle and 4.5 cm³ of a 4.67 Molar (13.7 wt.% Al) solution of methylalumoxane were added. The bottle was shaken for about one minute to form a yellow solution which was used immediately as described below.

Under an inert atmosphere, 2.508 grams of the titanium-containing catalyst described above [(A) Titanium Catalyst Component Preparation] was added to a 300 cm³ pear flask containing a magnetic stirring bar which was used to agitate the catalyst powder vigorously. Then at room temperature, 3.76 cm³ of solution (X) described above, was added dropwise to the flask over a 12 minute period. The total volume of solution (X) used was such that the titanium containing catalyst always appeared dry during the entire addition time. However, during this addition time, the light tan titanium-containing catalyst turned a dark brown colour. Finally, the pear flask was placed into an oil bath set at 55-60°C, and the residual toluene from solution (X) was removed with a nitrogen purge to give a dry, tan, free-flowing powder.

### Example 2

Large-Scale Catalyst Preparation: Solution B: 12.95 grams of (BuCp)₂ZrCl₂ was transferred to a one-litre bottle and 687 ml of a 4.67 Molar (13.7 wt.% Al) solution of methylalumoxane were added. The bottle was shaken for about one minute to form a yellow solution which was transferred into a 1.5 litre stainless steel hoke bomb and used immediately as described below.

Under an inert atmosphere, 465 grams of the titanium-containing catalyst described above [(A) Titanium Catalyst Component Preparation] was added to a 2-gallon (0.008 m³, glass-reactor vessel containing a helical stirrer to agitate the catalyst powder and a temperature jacket which was set at about 30°C. The stirrer was set at 125 rpm. Then, the contents of the hoke bomb (solution B) was added to the titanium-containing catalyst in approximately 5-10 cm³ aliquots every 30-60 seconds over a 45 minute period. The total volume of solution (B) used was such that the titanium containing catalyst always appeared "dry" during the entire addition time. However, during this addition time, the light tan titanium-containing catalyst turned a dark brown colour. After the addition of solution (B) was complete, the jacket temperature was set at 45°C and the residual toluene was removed with a nitrogen purge for 5 hrs. After this time the catalyst was a dark brown free-flowing powder. Analytical results: Mg, 0.99 wt.%; Ti, 0.96 wt.%; Al, 11.09 wt.% and Zr, 0.43 wt.%.

### Example 3

### Polymerization - Slurry

Ethylene/1-hexene copolymer was prepared with the bimetallic (Ti/Zr) composition of Example 2 to produce HDPE with a relatively high molecular weight.

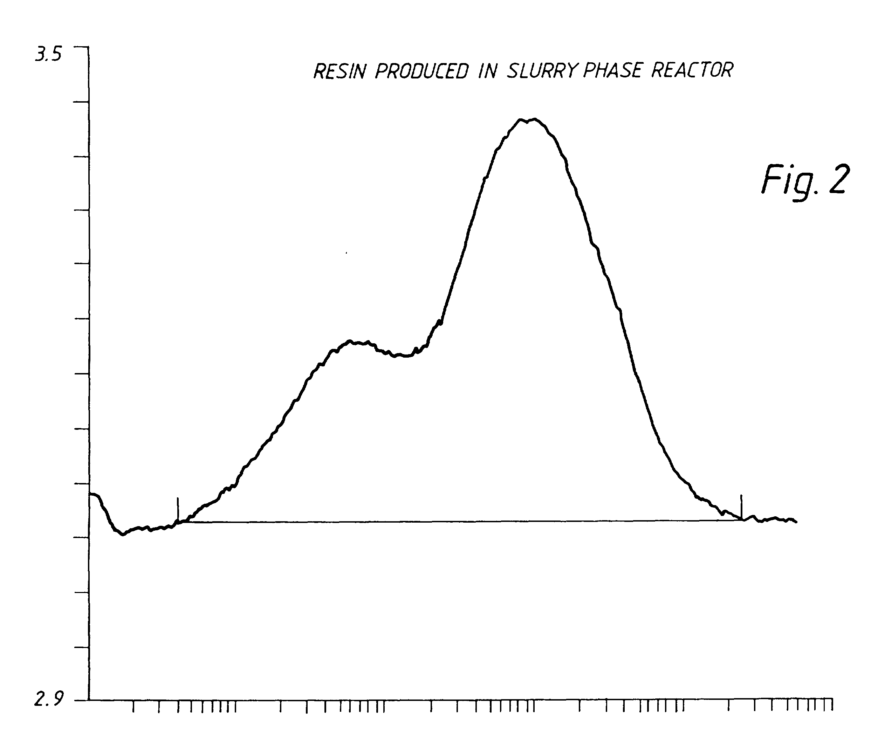

A 1.6 litre stainless steel autoclave, at about 47°C. was filled with 0.750 litres of dry hexane, 0.030 litres of dry 1-hexene and 4.0 mmols of trimethylaluminum (TMA) was added while under a slow nitrogen purge. The reactor was closed, the stirring rate was set at about 900 rpm, the internal temperature was increased to 85°C. and the internal pressure was raised from 7 psi to 13 psi (48 to 90 KPa) with hydrogen. Ethylene was introduced to maintain the reactor pressure at about 200 psi (1.4 MPa). Next, 0.0244 grams of catalyst composition of Example 2 was introduced into the reactor with ethylene overpressure and the temperature was increased and held at 95°C. The polymerization was continued for 60 minutes, and then the ethylene supply was stopped and the reactor allowed to cool to room temperature. 36.6 grams of polyethylene were collected. The HLMI of the polymer was 4.3 indicating a relatively high molecular weight and the GPC chromatogram is shown in Figure 2.

### Example 4

### Polymerization - Gas Phase Fluid-bed Reactor

The catalyst of Example 2 was added to a fluid-bed gas phase reactor under the following conditions:

| | |
|---|---|
| Ethylene | 185 psi (1.28 MPa) |
| H₂/C₂ | 0.009 |
| Hexene/ethylene | 0.013 |
| Reactor Temp. | 90°C |
| Cocatalyst | TMA (trimethylaluminum) 300 ppm based on ethylene feed |

### Example 5

### Product - Alpine Film Line:

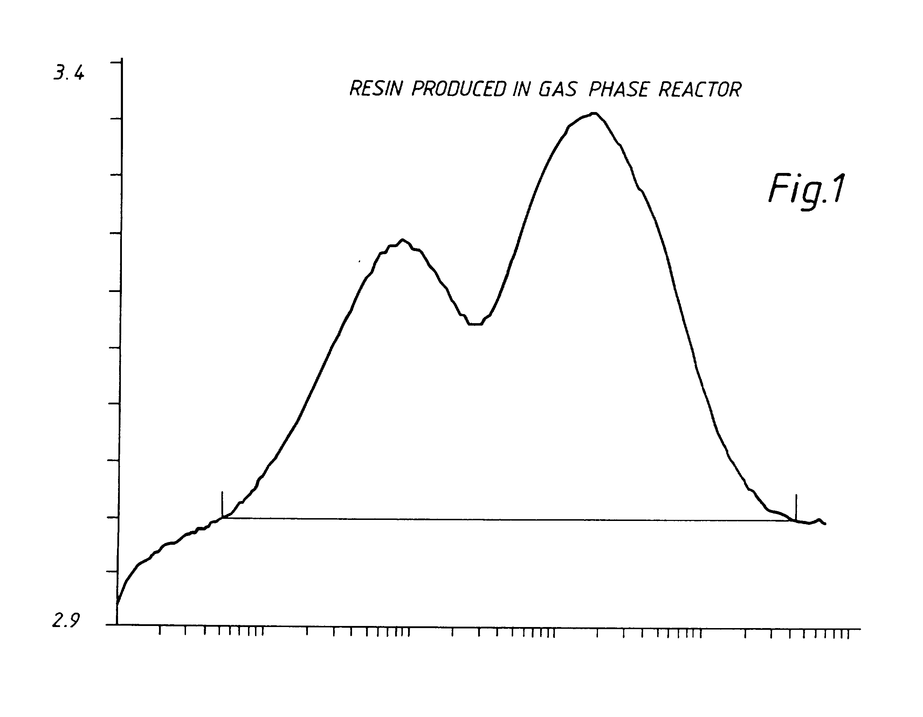

Polymer produced in Example 4 with a HLMI of 5.9, MFR of 128, which gave a GPC chromatogram with a HMW/LMW ratio of 64.2/35.8 as shown in Figure 1, was fabricated into HDPE film at 0.5 and 1.0 mil (13 and 25 µ). The impact data is shown below:

| | | | |
|---|---|---|---|
| RESIN | FI/MFR* | 1.0 mil Dart Drop (25µ) | 0.5 mil Dart Drop (13µ) |
| Example 4 | 5/111 | 752 | 415 |
| herein | | | |
| Tandem | 7/110 | 275 | 395 |

| | | | |
|---|---|---|---|
| * values for pellets obtained after stabilizer package was added to granular resin | | | |

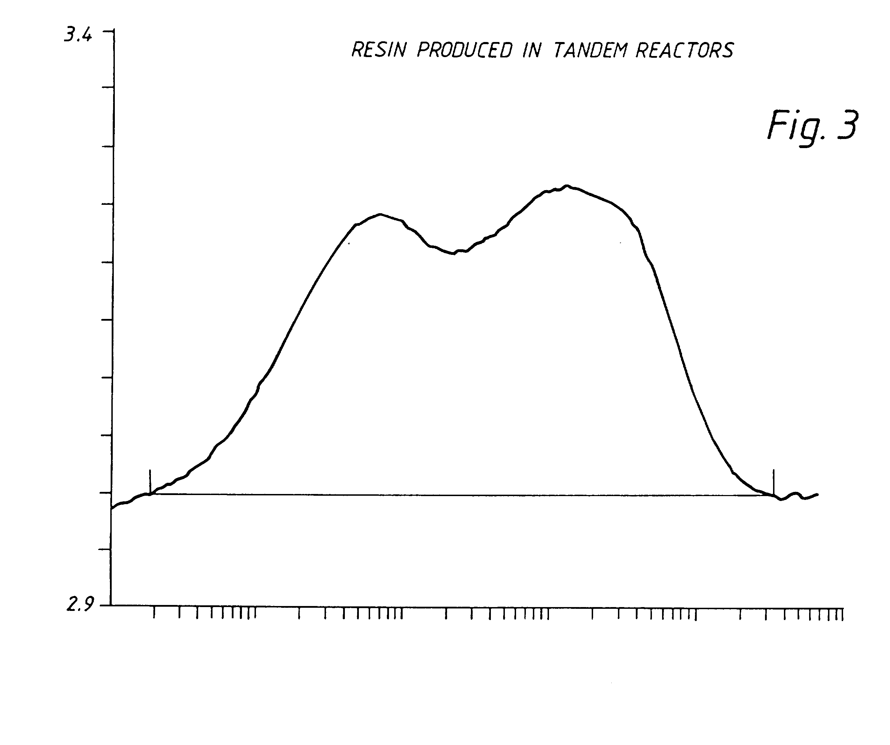

The molecular weight distribution (MWD) of polymer produced in Example 4 from the gas phase reactor and polymer from the slurry reactor (Example 3) were examined by Gel Permeation Chromatography (GPC), and the results clearly show that both polymers have a bimodal MWD (Figures 1 and 2). Figure 3 shows the GPC chromatogram for a HDPE polymer prepared in tandem gas phase reactors. Comparison of the GPC chromatograms shows that the polymer prepared in a single reactor (either gas phase or slurry) with the catalyst of this invention has a bimodal MWD similar to the polymer prepared in tandem reactors.

Presently, commercial samples of HDPE with a bimodal MWD are produced with a tandem reactor process. In such a process, the catalyst is exposed to one reactor in the presence of very low levels of hydrogen as chain transfer agent, and then transferred into a second reactor with relatively large amounts of hydrogen. The first reactor produces the high-molecular weight component, while the second reactor produces the low-molecular weight component.

Film toughness properties, as measured by Dart Drop Impact (DDI), show that the resin prepared with the bimetallic catalyst in a single reactor has significantly better properties than the resin produced in tandem gas phase reactors. The polymer of this invention also exhibited good film bubble stability without having to tailor the resin in an extruder prior to the film forming process.

## Claims

1. A process for preparing bimodal molecular weight distribution, high density and linear low density polymers and copolymers of ethylene, comprising polymerising ethylene in a reactor in the presence of an aluminium alkyl non-oxygen containing activator and a catalyst comprising, carried on a dry, anhydrous solid support,
(a) a metallocene compound of a transition metal activated by an alumoxane; and
(b) a non-metallocene transition metal compound, for activation by the aluminium alkyl non-oxygen containing activator;
and wherein the support is the reaction product of:
(1) silica having OH groups, impregnated with RₘMgR'ₙ, wherein each of Rₘ and Rₙ is alkyl group containing 1 to 12 carbon atoms, each of m and n is 0, 1 or 2 provided that m+n is equal to the valency of Mg, and RₘMgR'ₙ is present in an amount to provide a RₘMgR'ₙ: OH molar ratio of 0.5:1 to 4:1; and
(2) an organic alcohol reagent (R''OH) providing alkoxy groups having a formula R''O-, wherein R'' is an alkyl group containing 1 to 12 carbons, said alkoxy groups being effective to displace the Rₘ and R'ₙ of said RₘMgR'ₙ, and said reagent being used in an amount effective to provide an alcohol: Mg molar ratio of 0.5 to 2.0; and
wherein there is no alumoxane fed to the reactor.

2. A process according to claim 1, wherein each of Rₘ and R'ₙ is alkyl group containing 4 to 10 carbon atoms.

3. A process according to claim 2, wherein each of Rₘ and R'ₙ is a butyl group.

4. A process according to claim 2, wherein each of Rₘ and R'ₙ is n-butyl.

5. A process according to any one of claims 1 to 4, wherein R'' is an alkyl group containing 1 to 8 carbon atoms.

6. A process according to any one of the preceding claims, wherein the R''O- is provided as an alcohol.

7. A process according to any one of the preceding claims, wherein the reaction product is formed by
(i) providing a slurry of a non-polar solvent and a solid porous silica having -OH groups;
(ii) impregnating said silica, with said RₘMgR'ₙ, to form an intermediate (ii), wherein the Mg:-OH groups ratio is less than 2, wherein said RₘMgR'ₙ is soluble in said non-polar solvent;
(iii) treating the intermediate from step (ii) with an amount of R''OH, which amount is effective to provide a R"OH:RₘMgR'ₙ molar ratio of 0.5 to 2.0.

8. A process according to claim 7, which includes further steps, after (iii), comprising:
(iv) treating the product of step (iii) product with TiCl₄ to form a titanium containing intermediate; and
(v) combining the titanium containing intermediate with a said activator.

9. A process according to any one of the preceding claims, wherein the non-metallocene transition metal is titanium.

10. A process according to claim 9, wherein the non-metallocene transition metal is titanium tetrachloride.

11. A process according to any one of the preceding claims, wherein the activator is trimethylaluminum.

12. A process according to any one of the preceding claims, wherein the metallocene transition metal is provided as a compound which has the formula CpₓMA_{y}B_{z}, wherein Cp is cyclopentadienyl unsubstituted or substituted by alkyl or alkylene of 1 to 6 carbon atoms; x is at least 1; each of A and B is halogen or alkyl of 1 to 8 carbon atoms, and y plus z is 3 or less provided that x+y+z is equal to the valence of M; and M is selected from the group consisting of titanium or zirconium or hafnium.

13. A process according to claim 12, wherein the metallocene compound is a substituted dicyclopentadienyl transition metal compound.

14. A process according to claim 12, wherein the metallocene compound is selected from the group consisting of bis-(cyclopentadienyl) zirconium dichloride and bis-(n-butylcyclopentadienyl) zirconium dichloride.

15. A process according to any one of the preceding claims, wherein the metallocene compound is activated with a solution of methylalumoxane; wherein the silica has a pore volume in the range of 1.0 cm³/g to 4.0 cm³/g; and wherein the solution has a volume which is equal to the total pore volume.

16. A process according to any one of the preceding wherein the polymerization claims is carried out in a single reactor.

17. A process according to any one of the preceding claims, wherein said ethylene is copolymerized with a C₃ to C₈ alpha olefin.

## Patentansprüche

1. Verfahren zur Herstellung von eine bimodale Molekulargewichtsverteilung aufweisenden Ethylenpolymeren und -copolymeren hoher Dichte und linearen Ethylenpolymeren und -copolymeren geringer Dichte, das die Polymerisation von Ethylen in einem Reaktor in Gegenwart eines Aluminiumalkyl-Aktivators, der keinen Sauerstoff enthält, und eines Katalysators umfaßt, der, auf einem trockenen wasserfreien festen Träger getragen, umfaßt:
(a) eine Metallocenverbindung eines Übergangsmetalls, von einem Alumoxan aktiviert und
(b) eine Übergangsmetallverbindung in Form eines Nichtmetallocens für die Aktivierung durch den Aluminiumalkyl-Aktivator, der keinen Sauerstoff enthält,
und wobei der Träger das Reaktionsprodukt ist von:
(1) Siliciumdioxid mit OH-Gruppen, imprägniert mit RₘMgR'ₙ, worin Rₘ und Rₙ jeweils eine Alkylgruppe mit 1 bis 12 Kohlenstoffatomen sind, m und n jeweils 0, 1 oder 2 sind, vorausgesetzt, daß m+n gleich der Valenz von Mg ist, und RₘMgR'ₙ in einer Menge vorhanden ist, daß ein Molverhältnis von RₘMgR'ₙ:OH von 0,5:1 bis 4:1 entsteht, und
(2) einem Reagenz in Form eines organischen Alkohols (R"OH), das Alkoxygruppen der Formel R"O- bereitstellt, wobei R" eine Alkylgruppe mit 1 bis 12 Kohlenstoffatomen ist, die Alkyloxygruppen eine Verdrängung von Rₘ und R'ₙ des RₘMgR'ₙ bewirken und das Reagenz in einer Menge verwendet wird, die die Entstehung eines Molverhältnisses von Alkohol:Mg von 0,5 bis 2,0 bewirkt, und
wobei dem Reaktor kein Alumoxan zugeführt wird.

2. Verfahren nach Anspruch 1, wobei Rₘ und R'ₙ jeweils eine Alkylgruppe mit 4 bis 10 Kohlenstoffatomen sind.

3. Verfahren nach Anspruch 2, wobei Rₘ und R'ₙ jeweils eine Butylgruppe sind.

4. Verfahren nach Anspruch 2, wobei Rₘ und R'ₙ jeweils eine n-Butylgruppe sind.

5. Verfahren nach einem der Ansprüche 1 bis 4, wobei R" eine Alkylgruppe mit 1 bis 8 Kohlenstoffatomen ist.

6. Verfahren nach einem der vorstehenden Ansprüche, wobei R"O- als ein Alkohol bereitgestellt wird.

7. Verfahren nach einem der vorstehenden Ansprüche, wobei das Reaktionsprodukt erzeugt wird durch:
(i) Bereitstellen einer Suspension von einem nichtpolaren Lösungsmittel und festem porösem Siliciumdioxid mit -OH-Gruppen,
(ii) Imprägnieren des Siliciumdioxids mit dem RₘMgR'ₙ, wodurch ein Zwischenprodukt (ii) hergestellt wird, wobei das Verhältnis von Mg:-OH-Gruppen weniger als 2 beträgt, wobei das RₘMgR'ₙ in dem nichtpolaren Lösungsmittel löslich ist,
(iii) Behandeln des Zwischenproduktes vom Schritt (ii) mit einer Menge von R"OH, die ein Molverhältnis von R"OH: RₘMgR'ₙ von 0,5 bis 2,0 bewirkt.

8. Verfahren nach Anspruch 7, das nach (iii) weitere Schritte einschließt, welche umfassen:
(iv) Behandeln des Produktes vom Schritt (iii) mit TiCl₄, wodurch ein Titan enthaltendes Zwischenprodukt hergestellt wird, und
(v) Kombinieren des Titan enthaltenden Zwischenproduktes mit dem Aktivator.

9. Verfahren nach einem der vorstehenden Ansprüche, wobei das Übergangsmetall in Form eines Nichtmetallocens Titan ist.

10. Verfahren nach Anspruch 9, wobei das Übergangsmetall in Form eines Nichtmetallocens Titantetrachlorid ist.

11. Verfahren nach einem der vorstehenden Ansprüche, wobei der Aktivator Tritmethylaluminium ist.

12. Verfahren nach einem der vorstehenden Ansprüche, wobei das Übergangsmetall in Form eines Metallocens als eine Verbindung bereitgestellt wird, die die Formel CpₓMA_{y}B_{z} hat, worin Cp eine Cyclopentadienylgruppe, unsubstituiert oder mit einer Alkyl- oder Alkylengruppe mit 1 bis 6 Kohlenstoffatomen substituiert, ist; x mindestens 1 ist; A und B jeweils ein Halogenatom oder eine Alkylgruppe mit 1 bis 8 Kohlenstoffatomen sind; und y + z 3 oder weniger ist, vorausgesetzt, daß x + y + z gleich der Valenz von M ist; und M aus der Gruppe von Titan oder Zirconium oder Hafnium ausgewählt ist.

13. Verfahren nach Anspruch 12, wobei die Metallocenverbindung eine substituierte Dicyclopentadienylübergangsmetallverbindung ist.

14. Verfahren nach Anspruch 12, wobei die Metallocenverbindung aus der Gruppe von Bis(cyclopentadienyl)zirconiumdichlorid und Bis(n-butylcyclopentadienyl)zirconiumdichlorid ausgewählt ist.

15. Verfahren nach einem der vorstehenden Ansprüche, wobei die Metallocenverbindung mit einer Methylalumoxanlösung aktiviert wird, wobei das Siliciumdioxid ein Porenvolumen im Bereich von 1,0 bis 4,0 cm³/g hat und wobei die Lösung ein Volumen hat, das gleich dem gesamten Porenvolumen ist.

16. Verfahren nach einem der vorstehenden Ansprüche, wobei die Polymerisation in einem einzelnen Reaktor erfolgt.

17. Verfahren nach einem der vorstehenden Ansprüche, wobei das Ethylen mit einem C₃-C₈-α-Olefin copolymerisiert wird.

## Revendications

1. Un procédé de préparation de polymères et copolymères haute densité et basse densité linéaire, à distribution de masse moléculaire bimodale, de l'éthylène, comprenant la polymérisation de l'éthylène dans un réacteur, en présence d'un activateur alkyl-aluminium ne contenant pas d'oxygène et d'un catalyseur comprenant, supporté sur un support solide anhydre sec:
(a) un dérivé métallocène d'un métal de transition activé par un alumoxane; et
(b) un dérivé de métal de transition non métallocène pour l'activation par l'activateur à base d'alkyl-aluminium ne contenant pas d'oxygène;
et le support étant le produit de la réaction de:
(1) une silice ayant des groupes OH, imprégnée par RₘMgR'ₙ, où chacun des Rₘ et Rₙ est un groupe alkyle contenant de 1 à 12 atomes de carbone, chacun des m et n vaut 0, 1 ou 2, à condition que m+n soit égal à la valence de Mg, et RₘMgR'ₙ est présent en une quantité permettant d'obtenir un rapport molaire RₘMgR'ₙ/OH de 0,5/1 à 4/1 et
(2) un réactif alcoolique organique (R"OH) fournissant des groupes alcoxy ayant la formule R"O-, où R" est un groupe alkyle comprenant de 1 à 12 atomes de carbone, lesdits groupes alcoxy étant efficaces pour déplacer les radicaux Rₘ et le R'ₙ dudit RₘMgR'ₙ, et ledit réactif étant utilisé en une quantité efficace pour obtenir un rapport molaire alcool/Mg de 0,5 à 2,0; et
et dans lequel on n'introduit pas d'alumoxane dans le réacteur.

2. Un procédé selon la revendication 1. dans lequel chacun des Rₘ et R'ₙ est un groupe alkyle comportant de 4 à 10 atomes de carbone.

3. Un procédé selon la revendication 2, dans lequel chacun des Rₘ et R'ₙ est un radical butyle.

4. Un procédé selon la revendication 2. dans lequel chacun des Rₘ et R'ₙ est un radical n-butyle.

5. Un procédé selon l'une quelconque des revendications 1 à 4, dans lequel R" est un groupe alkyle comportant de 1 à 8 atomes de carbone.

6. Un procédé selon l'une quelconque des revendications précédentes dans lequel le groupe R"O- est amené sous forme d'alcool.

7. Un procédé selon l'une quelconque des revendications précédentes dans lequel le produit de réaction est obtenu en:
(i) introduisant une suspension de solvant non polaire et de la silice poreuse solide ayant des groupes OH;
(ii) imprégnant ladite silice par ledit RₘMgR'ₙ pour former un intermédiaire (ii), où le rapport Mg/-OH est inférieur à 2, où ledit RₘMgR'ₙ est soluble dans ledit solvant non polaire;
(iii) traitant l'intermédiaire provenant de l'étape (ii) par une quantité de R"OH, cette quantité étant efficace pour obtenir un rapport molaire R"OH/RₘMgR'ₙ de 0,5 à 2,0.

8. Un procédé selon la revendication 7, qui comprend, après (iii), les étapes supplémentaires consistant en:
(iv) le traitement du produit de l'étape (iii) avec TiCl₄ pour former un intermédiaire contenant du titane et
(v) la combinaison de l'intermédiaire contenant du titane avec ledit activateur.

9. Un procédé selon l'une quelconque des revendications précédentes, dans lequel le métal de transition non-métallocène est le titane.

10. Un procédé selon la revendication 9, dans lequel le métal de transition non métallocène est le tétrachlorure de titane.

11. Un procédé selon l'une quelconque des revendications précédentes, dans lequel l'activateur est le triméthylaluminium.

12. Un procédé selon l'une quelconque des revendications précédentes, dans lequel le métal de transition du métallocène est amené sous forme de dérivé ayant la formule CpₓMA_{y}B_{z}, où Cp est un cyclopentadiényle non substitué ou substitué par un alkyle ou un alkylène de 1 à 6 atomes de carbone; x est égal à au moins 1; chacun des A et B est un atome d'halogène ou un radical alkyle comportant de 1 à 8 atomes de carbone, et y + z est égal à 3 ou moins pour autant que x+y+z soit égal à la valence de M; et M est choisi dans le groupe consistant en titane ou zirconium ou hafnium.

13. Un procédé selon la revendication 12, dans lequel le dérivé de métallocène est un dérivé de métal de transition dicyclopentadiényle substitué.

14. Un procédé selon la revendication 12, dans lequel le dérivé de métallocène est choisi dans le groupe consistant en dichlorure de bis(cyclopentadiényl)zirconium et dichlorure de bis-(n-butylcyclopentadiényl)zirconium.

15. Un procédé selon l'une quelconque des revendications précédentes, dans lequel le dérivé de métallocène est activé à l'aide d'une solution de méthylalumoxane; dans lequel la silice a un volume de pore de 1,0cm³/g à 4,0 cm³/g et dans lequel la solution a un volume qui est égal au volume total de pores.

16. Un procédé selon l'une quelconque des revendications précédentes dans lequel la polymérisation est effectuée dans un réacteur unique.

17. Un procédé selon l'une quelconque des revendications précédentes dans lequel ledit éthylène est polymérisé avec l'alpha-oléfine en C₃ à C₈.
